# EUROPÄISCHE PATENTANMELDUNG

(11) **EP 1 742 334 A1**
(43) Veröffentlichungstag der Anmeldung: **10.01.2007**
(21) Anmeldenummer: 05014692.7
(22) Anmeldetag: 06.07.2005
(51) Int. Cl.: H02K 9/04, H02K 9/06, H02K 11/04, H02K 5/18

(54) **Kompaktantrieb**

(71) Anmelder: Rausch, Hartmuth, 41352 Korschenbroich (DE); EAAT GmbH Chemnitz, 09120 Chemnitz (DE)
(72) Erfinder: Rausch, Hartmuth, Dr., 41352 Korschenbroich (DE); Schubert, Thomas, Dr., 09390 Gornsdorf (DE); Budig, Klaus Peter, Prof. Dr., 09122 Chemnitz (DE)

(57) **Zusammenfassung**

Ein Kompaktantrieb, bestehend aus einem Elektromotor mit Eigenlüfter und einem auf der Lüfterseite des Elektromotors axial angeordnetem Anbaugehäuse für die Unterbringung von Elektronikbaugruppen, dadurch gekennzeichnet, dass das Gehäuse 3 mit dem Elektromotor 2 über ein außen liegendes Verbindungsteil 4 an den Anbaustellen 5 und 6 verbunden ist und die zum Eigenlüfter 13 weisende Stirnseite des Gehäuses 3 durch einen Kühlkörper 9 und an der Gegenstirnseite durch einen Gehäusedeckel 10 verschlossen ist. Dabei weist der Kühlkörper 9 zur Lüfterseite hin Kühlrippen 11 auf und verfügt im Gehäuseinneren über eine Anbaufläche 21 zur direkten Montage von verlustbringenden Bauteilen der Elektronikbaugruppen. Das Verbindungsteil 4 ist so ausgestaltet, dass es neben netzseitigen Baugruppen die Kabelverbindung zwischen Elektromotor 2 und Elektronikbaugruppen im Gehäuse 3 aufnehmen kann. Zwischen Elektromotor 2 und Gehäuse 3 ist der Eigenlüfter 13 von einer Luftführungshaube 15 derart umgeben, dass die vom Eigenüfter 13 durch die Kühlrippen 11 angesaugte Kühlluft 14 zum Luftaustritt 19 der Luftführungshaube geführt wird und über die Kühlrippen 20 des Elektromotors 2 geblasen wird.

## Beschreibung

Die Erfindung betrifft einen Kompaktantrieb, bestehend aus einem Elektromotor und einem angebauten Gehäuseset für die Leistungs-, Ansteuer-, Regelelektronik einschließlich der Netzschutzkomponenten, so gestaltet, dass einerseits das gesamte Aggregat in der motoreigenen Schutzart ausgeführt werden kann und andererseits mit dem motoreigenen Lüftersystem eine wirksame Kühlung des Gesamtaggregates in platzsparender Weise erfolgen kann.

Der Anbau eines Gehäuses für ein Steuer- oder Umrichtergerät an einen Elektromotor und der Kühlung des gesamten Aggregates unter ausschließlicher Nutzung des motoreigenen Lüfters ist in mehrfacher Hinsicht bekannt. Dabei erfolgt der Anbau eines Gehäuses an den Elektromotor entweder parallel neben (z.B. DE 197 04 226) oder axial hinter den Elektromotor (z.B. DE 196 34 097), wobei die Anbaugehäuse entweder ganz oder teilweise mit Kühlrippen versehen sind. Derartige Ausführungsvorschläge haben den Nachteil, dass eine gegenseitige thermische Verkopplung zwischen Anbaugerät und Elektromotor durch gemeinsame Anbauflächen und/oder eine unzureichende Anbindung an die geförderte Kühlluftmenge des Motors einer wirkungsvollen Kühlung und weiteren Leistungssteigerung schnell Grenzen gesetzt sind. Eine Lösung zur thermischen Entkopplung zwischen Anbaugerät und Elektromotor unter Nutzung der gesamten Kühlluftmenge wird z.B. in DE 199 17 628 vorgeschlagen, wobei jedoch das Anbaugerät mit Oberflächenrippen aufgrund langer Rippenlängen relativ hohe Druckverluste mit sich bringt, die i.a. durch einen größeren Lüfter ausgeglichen werden müssen. Außerdem haben diese Ausführungsvorschläge den Nachteil, dass sich die Hüllmaße des Antriebes durch den Anbau des Gehäuses gegenüber dem ursprünglichen Elektromotor entweder in der Höhe oder in der Länge nahezu verdoppeln. Dies bringt oft Platzprobleme für die Integration derartiger Aggregate in bereits bestehende Anlagen mit sich. Aus diesen Gründen ist die Ausführbarkeit von luftgekühlten Kompaktantrieben bisher auf relativ kleine Antriebsleistungen begrenzt.

Der Erfindung liegt die Aufgabe zugrunde, die wirksame Luftkühlung für das Aggregat hinsichtlich einer deutlichen Leistungssteigerung zu verbessern und gleichzeitig den Platzbedarf für einen Gehäuseanbau deutlich zu reduzieren, wobei die Kühlung des Aggregates ausschließlich durch den motoreigenen Lüfter erfolgt.

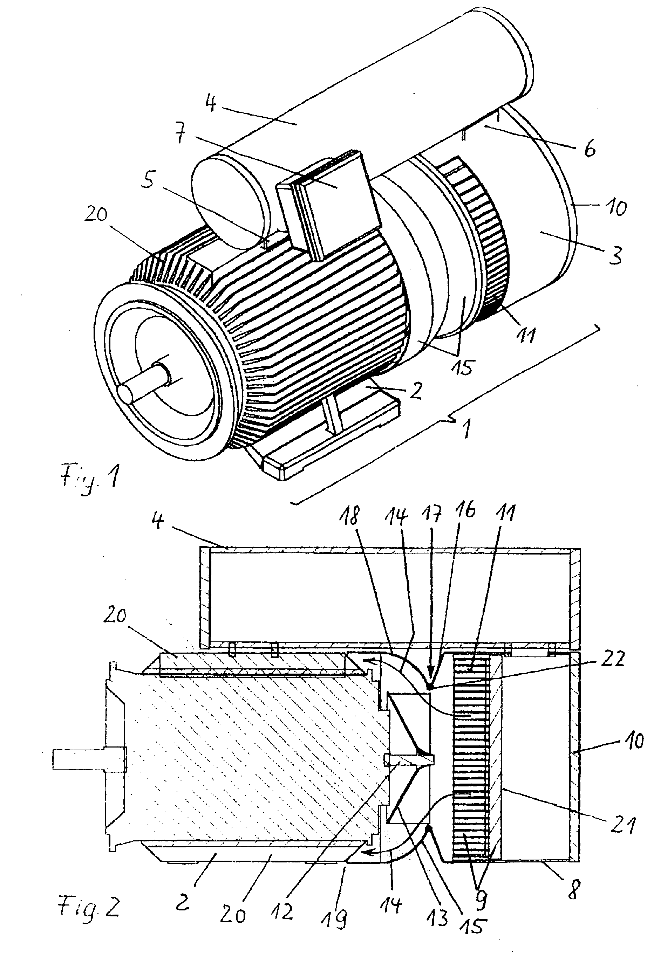

In Fig. 1 und Fig. 2 ist die Erfindung für einen Kompaktantrieb 1 mit einem oberflächengekühlten Elektromotor 2 mit Eigenlüfter 13 und axial angebautem Gehäuse 3 für einen nicht dargestellten Umrichtereinbau als ein Ausführungsbeispiel dargestellt. Der Elektromotor 2 und das Gehäuse 3 sind erfindungsgemäß über ein Verbindungsteil 4 miteinander an der Anbaustelle 5 zum Elektromotor 2 und an der Anbaustelle 6 zum Gehäuse 3 verbunden. Die Anbaustelle 5 am Elektromotor 2 entspricht dabei bevorzugt dem Motoranschlussstutzen für den Motoranschlusskasten ohne Gehäuseanbau. Der Anschlusskasten 7 dient dem elektrischen Netzauschluß und ist am Verbindungsteil 4 in beliebiger Lage, bevorzugt jedoch in der seitlichen Lage, angebracht. Das Verbindungsteil 4 ist erfindungsgemäß so gestaltet, dass es neben der hier nicht dargestellten Verlegung aller Kabelverbindungen zwischen Motor und Umrichter auch der Aufnahme aller hier nicht dargestellten netzseitigen Komponenten, wie z.B. Netzdrossel oder Netzfilter dient. Das Gehäuse 3 besteht aus einem Gehäusemantel 8, das motorseitig durch einen Kühlkörper 9 und auf der anderen Seite durch einen Gehäusedeckel 10 verschlossen ist. Der Kühlkörper 9 ist dabei erfindungsgemäß so angeordnet und ausgestaltet, dass die Kühlrippen 11 nach außen zum Elektromotor 2 weisen und auf der glatten, zum Gehäuseinneren des Gehäuses 3 weisenden Anbaufläche 21 alle, hier nicht dargestellten, wesentlichen verlustbehafteten Bauteile z.B. eines Umrichters hinsichtlich niedrigstem Wärmeübergang montiert werden können. Die Kühlrippen 11 des Kühlkörpers 9 können z.B. radialsymmetrisch von aussen nach innen verlaufen, sie sind jedoch bevorzugt zueinander parallel angeordnet. Der auf der Rotorwelle 12 des Elektromotors 2 befestigte Eigenlüfter 13 saugt erfindungsgemäß die Kühlluft 14 seitlich durch die Kühlrippen 11 des Kühlkörpers 9 an Die Kühlluft 14 strömt dann in den durch die Kühlrippen 11 begrenzten Kühlkanäle radial von außen nach innen und verlässt im weiteren Verlauf die Kühlrippen 11, wird durch den sich verjüngenden Ansaugabschnitt 16 der Luftführungshaube 15 axial in Richtung der Luftdurchtrittsblende 17 zum Eigenlüfter 13 geführt und anschließend entlang des sich wieder erweiternden Ausblasabschnitts 18 der Luftführungshaube 15 durch den Lüfter 13 hindurch bis zum Luftaustritt 19 der Luftführungshaube 15 geleitet, um dann über die Kühlrippen 20 des Elektromotors 2 geblasen zu werden. Die Luftführungshaube 15 ist vorteilhaft so gestaltet, dass die Kontur von Ausblasabschnitt 18 und Luftdurchtrittsblende 17 von der Luftführungshaube 15 der Kontur der Lüfterhaube des Elektromotors ohne Gehäuseanbau entspricht und erfindungsgemäß mit dem Ansaugabschnitt 16 der Luftführungshaube 15 zu einer gemeinsamen Bauteilkontur direkt oder schwingungsentkoppelt durch ein elastisches Verbindungselement 22 (z.B. Profil-Dichtschnur) luftdicht verbunden ist. Dabei übernimmt das Verbindungsteil 4 in der Hauptsache die Befestigungs- und Tragfunktion für das Gehäuse 3.

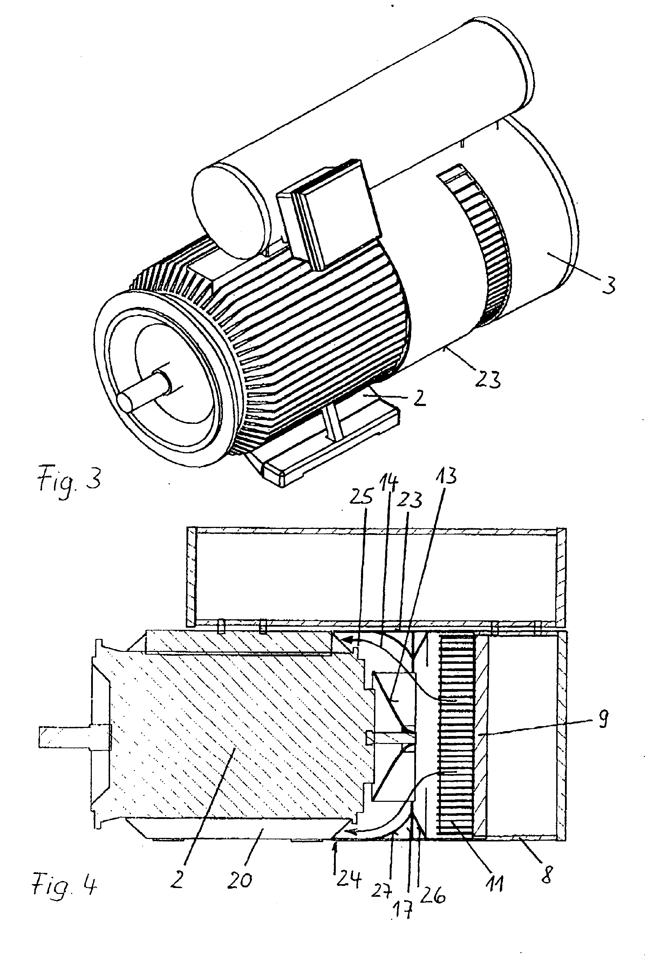

Eine Ausgestaltungsvariante mit zusätzlicher Stützfunktion für das Gehäuse 3 ist in Fig. 3 und Fig. 4 durch eine Verlängerung 23 des Gehäusemantels 8 bis zum Beginn der Kühlrippen 20 des Elektromotors 2 mit zusätzlicher Befestigung 24 am Elektromotor 2 bzw. an dem lüfterseitigen Lagerschild 25 des Elektromotors 2 dargestellt. Dabei ist es hinsichtlich niedriger Druckverluste vorteilhaft, die Kühlluft 14 nach dem Austritt aus den Kühlrippen 11 des Kühlkörpers 9 durch einen sich zum Eigenlüfter 13 hin verjüngenden Ansaugring 26, einer vor dem Eigenlüfter 13 liegenden Luftdurchtrittsblende 17 und einem sich anschließend nach der Luftdurchtrittsblende 17 wieder erweiternden Luftführungsring 27 zu führen. Der Ansaugring 26, der Luftführungsring 27 und die Luftdurchtrittsblende 17 können vorteilhaft auch aus einem entsprechenden Bauteil gefertigt sein.

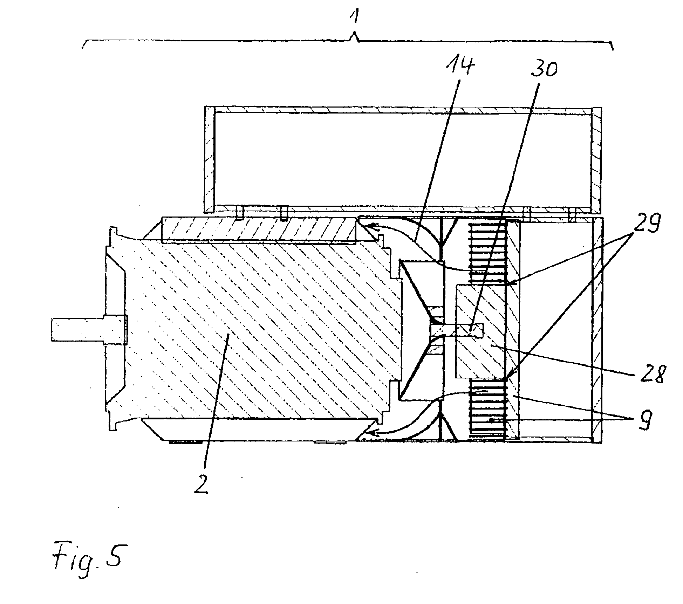

In Fig. 5 ist die Erfindung für einen Kompaktantrieb 1 mit einem oberflächengekühlten Elektromotor 2 mit Fremdlüftermotor 28 dargestellt. Das Kühlrippenzentrum 29 im Kühlkörpers 9 trägt aufgrund der Kühlluft 14 relativ wenig zur Kühlwirkung bei, so dass ein Fehlen dieses Kühlrippenbereichs die Kühlwirkung nicht nennenswert beeinflusst. Wird das Lüfterrad des Eigenlüfters 13 von der Motorwelle 12 des Elektromotors 2 getrennt und mit der Rotorwelle 30 eines Fremdlüftermotors 28 verbunden, kann der Lüfter unabhängig von der Drehzahl des Elektromotors 2 betrieben werden und es wird eine von der Drehzahl des Elektromotors 2 unabhängige Kühlwirkung erreicht.

### Bezugszeichenliste

- 1: Kompaktantrieb
- 2: Elektromotor
- 3: Gehäuse
- 4: Verbindungsteil
- 5: Anbaustelle Elektromotor
- 6: Anbaustelle Gehäuse
- 7: Anschlusskasten
- 8: Gehäusemantel
- 9: Kühlkörper
- 10: Gehäusedeckel
- 11: Kühlrippen Kühlkörper
- 12: Rotorwelle Elektromotor
- 13: Eigenlüfter
- 14: Kühlluft
- 15: Luftführungshaube
- 16: Ansaugabschnitt der Luftführungshaube
- 17: Luftdurchtrittsblende
- 18: Ausblasabschnitt der Luftführungshaube
- 19: Luftaustritt der Luftführungshaube
- 20: Kühlrippen Elektromotor
- 21: Anbaufläche Kühlkörper
- 22: Verbindungselement
- 23: Verlängerung
- 24: Befestigung ,
- 25: Lagerschild Elektromotor
- 26: Ansaugring
- 27: Luftführungsring
- 28: Fremdlüftermotor
- 29: Kühlrippenzentrum
- 30: Rotorwelle Fremdlüftermotor

## Patentansprüche

1. Kompaktantrieb, bestehend aus einem Elektromotor mit auf dessen Rotorwelle montiertem Eigenlüfter und einem auf der Lüfterseite des Elektromotors axial angeordnetes Gehäuse für die Unterbringung von Elektronikbaugruppen, **dadurch gekennzeichnet, dass** das Gehäuse mit dem Motor über ein außen liegendes Verbindungsteil verbunden ist und das Gehäuse mindestens an der dem Elektromotor zugewandten Stirnseite über Kühlrippen verfügt.

2. Kompaktantrieb nach Anspruch 1, **dadurch gekennzeichnet, dass** in das Verbindungsteil netzseitige Baugruppen des Anbaugerätes eingebaut sind.

3. Kompaktantrieb nach Anspruch 1 und 2, **dadurch gekennzeichnet, dass** die motorseitige Stirnseite des axial angebauten Gehäuses aus einem Kühlkörper besteht, bei dem die zum Motor zeigende Seite mit Kühlrippen versehen ist und an dem im Gehäuseinneren die verlustbringenden Bauteile und Baugruppen direkt montiert sind.

4. Kompaktantrieb nach Anspruch 1, 2 und 3, **dadurch gekennzeichnet, dass** den Eigenlüfter zwischen Elektromotor- und Gehäuse eine Luftführungshaube umgibt, die einen Ansaugabschnitt, einen Ausblasabschnitt und eine Luftdurchtrittsblende aufweist, derart, dass der Ansaugabschnitt mit einer Stirnseite die Kühlrippen des Gehäuses bis zu mindestens einer Lufteintrittsöffnung über den Kühlrippen umfasst und mit der anderen Stirnseite in die Luftdurchtrittsblende übergeht, und dass der Ausblasabschnitt mit einer Stirnseite mindestens bis zum Beginn der Kühlrippen des Elektromotors umfasst und mit der anderen Stirnseite in die Luftdurchtrittsblende übergeht.

5. Kompaktantrieb nach Anspruch 1, 2, 3 und 4, **dadurch gekennzeichnet, dass** der Ausblasabschnitt der Luftführungshaube an der Luftdurchtrittsblende über ein elastisches Element luftdicht mit dem Ansaugabschnitt der Luftführungsblende verbunden ist.

6. Kompaktantrieb nach Anspruch 1, 2, 3, 4 und 5, **dadurch gekennzeichnet, dass** der Gehäusemantel des Gehäuses mindestens bis zum Beginn der Kühlrippen des Elektromotors verlängert ist, den Eigenlüfter und die Luftführungselemente zwischen Elektromotor und Gehäuse umgibt, und über den Kühlrippen des Gehäuses mindestens eine Öffnung für den Lufteintritt vorgesehen ist.

7. Kompaktantrieb nach Anspruch 1, 2, 3, 4, 5 und 6, **dadurch gekennzeichnet**, das im Zentrum der verrippten Seite des Gehäuses oder des Kühlkörpers ein Fremdlüftermotor eingelassen ist und mit dem motorseitigen Lüfterrad so verbunden ist, dass der Fremdlüfter unabhängig von der Motordrehzahl betrieben werden kann.
